# EUROPEAN PATENT SPECIFICATION

(11) **EP 3 968 185 B1**
(45) Date of publication and mention of the grant of the patent: **21.01.2026**
(21) Application number: 21160393.1
(22) Date of filing: 03.03.2021
(51) Int. Cl.: G06F 16/9535

(54) **METHOD AND APPARATUS FOR PUSHING INFORMATION, DEVICE AND STORAGE MEDIUM**
VERFAHREN UND VORRICHTUNG ZUM SCHIEBEN VON INFORMATIONEN, VORRICHTUNG UND SPEICHERMEDIUM
PROCÉDÉ ET APPAREIL DE POUSSÉE D'INFORMATIONS, DISPOSITIF ET SUPPORT D'ENREGISTREMENT

(30) Priority: 15.09.2020 CN 202010968742
(43) Date of publication of application: 16.03.2022
(73) Proprietor: Beijing Baidu Netcom Science and Technology Co., Ltd., Beijing 100085 (CN)
(72) Inventor: Wang, Haiwei, Beijing, Beijing 100085 (CN); Wang, Haifeng, Beijing, Beijing 100085 (CN); He, Wei, Beijing, Beijing 100085 (CN); Li, Ying, Beijing, Beijing 100085 (CN); Wang, Jie, Beijing, Beijing 100085 (CN); Zhu, Yong, Beijing, Beijing 100085 (CN)
(74) Representative: Nederlandsch Octrooibureau

(56) References cited:
- CN-A- 110 263 248
- CN-A- 111 199 503
- US-A1- 2019 228 069

## Description

### TECHNICAL FIELD

The present disclosure relates to the field of computer technology, particularly to the fields of knowledge graph and knowledge sharing, and more particularly to a method and apparatus for pushing information, a device and a storage medium.

### BACKGROUND

In the daily office scenario of an employee of an enterprise, the employee needs to deal with many specific things in completing the daily work. Here, large amount of information and knowledge are relied on to perform cooperation and decision-making in the process of dealing with the things. Knowledges in most enterprises are scattered and there is a lack of effective organization and management for the knowledge, resulting in that an employee spends a lot of time in the daily work to acquire various kinds of knowledge and information required in the office scenario. A smart office platform is an effective way to improve the work efficiency in the office scenario of the enterprise.

CN 110 263 248 A discloses an information push method, apparatus, storage medium, and server.

### SUMMARY OF THE INVENTION

The invention is defined in the appended claims.

### SUMMARY OF THE DISCLOSURE

A method and apparatus for pushing information, a storage medium and a computer program product are provided.

In a first aspect, a method for pushing information is provided. The method includes: acquiring a user identifier of a target user; in response to determining that the user identifier satisfies a preset condition, acquiring a work intention of the target user; determining target information based on the user identifier, the work intention and a pre-established knowledge graph; and pushing the target information to the target user.

In a second aspect, an apparatus for pushing information is provided. The apparatus includes: a first acquiring unit, configured to acquire a user identifier of a target user; a second acquiring unit, configured to, in response to determining that the user identifier satisfies a preset condition, acquire a work intention of the target user; an information determining unit, configured to determine target information based on the user identifier, the work intention and a pre-established knowledge graph; and an information pushing unit, configured to push the target information to the target user.

In a third aspect, an electronic device for pushing information is provided. The electronic device includes: at least one processor; and a storage device, communicated with the at least one processor, where the storage device stores an instruction executable by the at least one processor, and the instruction, when executed by the at least one processor, causes the at least one processor to perform the method according to the first aspect.

In a fourth aspect, a non-transitory computer readable storage medium, storing a computer instruction, where the computer instruction, when executed by a processor, causes the processor to perform the method according to the first aspect.

In a fifth aspect, a computer program product is provided. The computer program includes a computer program, the computer program, when executed by a processor, causes the processor to implement the method according to the first aspect.

According to the technology of the present disclosure, the problem that the efficiency of the employee in acquiring the enterprise knowledge in the existing office scenario is low is solved. The work intention of the user is analyzed, and the related knowledge is pushed to the user using the knowledge graph, thereby improving the office efficiency of the employee.

It should be understood that the content described in this part is not intended to identify key or important features of embodiments of the present disclosure, and is not used to limit the scope of the present disclosure. Other features of the present disclosure will be easily understood through the following description.

### BRIEF DESCRIPTION OF THE DRAWINGS

Accompanying drawings are used for a better understanding of the scheme, and do not constitute a limitation to the present disclosure. Here:
Fig. 1 is a diagram of a system architecture in which an embodiment of the present disclosure may be applied;
Fig. 2 is a flowchart of a method for pushing information according to an embodiment of the present disclosure;
Fig. 3 is a schematic diagram of an application scenario of the method for pushing information according to an embodiment of the present disclosure;
Fig. 4 is a flowchart of a method for pushing information according to another embodiment of the present disclosure;
Fig. 5 is a schematic structural diagram of an apparatus for pushing information according to an embodiment of the present disclosure; and
Fig. 6 is a block diagram of an electronic device adapted to implement the method for pushing information according to embodiments of the present disclosure.

### DETAILED DESCRIPTION OF EMBODIMENTS

Exemplary embodiments of the present disclosure are described below in combination with the accompanying drawings, and various details of embodiments of the present disclosure are included in the description to facilitate understanding, and should be considered as exemplary only. Accordingly, it should be recognized by one of ordinary skill in the art that various changes and modifications may be made to the embodiments described herein without departing from the scope of the present invention. Also, for clarity and conciseness, descriptions for well-known functions and structures are omitted in the following description.

It should be noted that embodiments in the present disclosure and the features in the embodiments may be combined with each other on a non-conflict basis. Embodiments of the present disclosure will be described below in detail with reference to the accompanying drawings and in combination with the embodiments.

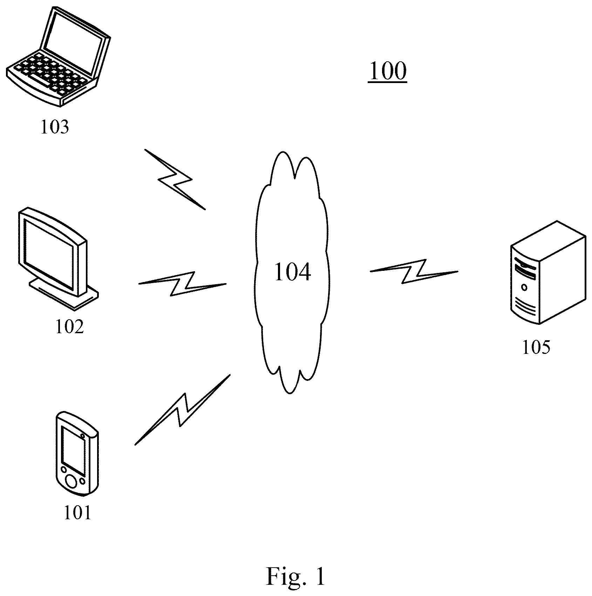

Fig. 1 illustrates a system architecture 100 in which a method for pushing information or an apparatus for pushing information according to an embodiment of the present disclosure may be applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may interact with the server 105 via the network 104 by using the terminal device 101, 102 or 103, to receive or send a message, etc. Various communication client applications (e.g., an audio and video playback application, a browser application, a social platform application, and a knowledge sharing application) may be installed on the terminal devices 101, 102 and 103.

The terminal devices 101, 102 and 103 may be hardware or software. When being the hardware, the terminal devices 101, 102 and 103 may be various electronic devices, including, but not limited to, a smart phone, a tablet computer, an e-book reader, a vehicle-mounted computer, a laptop portable computer, a desktop computer, etc. When being the software, the terminal devices 101, 102 or 103 may be installed in the above listed electronic devices. The terminal devices may be implemented as a plurality of pieces of software or a plurality of software modules (e.g., software or software modules for providing a distributed service), or may be implemented as a single piece of software or a single software module, which will not be specifically defined here.

The server 105 may be a server providing various services, for example, a backend server processing a user identifier provided by the terminal devices 101, 102, 103. The backend server may determine target information corresponding to the user identifier and push the target information to the terminal devices 101, 102 and/or 103.

It should be noted that the server 105 may be hardware or software. When being the hardware, the server 105 may be implemented as a distributed server cluster composed of a plurality of servers, or may be implemented as a single server. When being the software, the server 105 may be implemented as a plurality of pieces of software or a plurality of software modules (e.g., software or software modules for providing a distributed service), or may be implemented as a single piece of software or a single software module, which will not be specifically defined here.

It should be noted that the method for pushing information provided in embodiments of the present disclosure is generally performed by the server 105. Correspondingly, the apparatus for pushing information is generally provided in the server 105.

It should be appreciated that the numbers of the terminal devices, the networks and the servers in Fig. 1 are merely illustrative. Any numbers of terminal devices, networks and servers may be provided based on actual requirements.

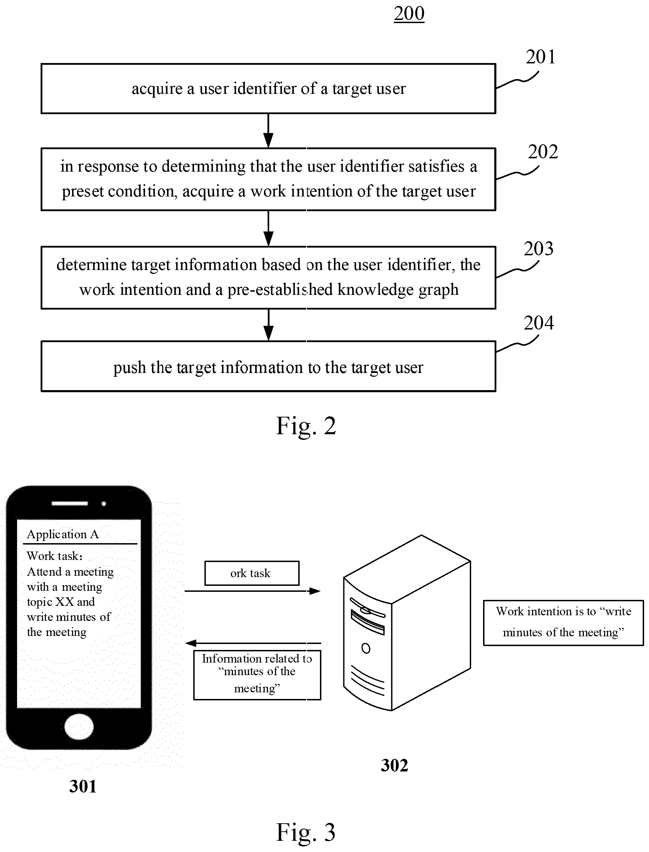

Further referring to Fig. 2, Fig. 2 illustrates a flow 200 of a method for pushing information according to an embodiment of the present disclosure. The method for pushing information in this embodiment may include:
Step 201, acquiring a user identifier of a target user.
   In this embodiment, an executing body (e.g., the server 105 shown in Fig. 1) of the method for pushing information may acquire the user identifier of the target user in various ways. Here, the target user may be any user in an enterprise, may be any user using an application program, or may be any user registered with a website. The user identifier may be various identifiers capable of uniquely representing the target user, for example, may be an identity card number, a mailbox user name, or a registration account number.
Step 202, in response to determining that the user identifier satisfies a preset condition, acquiring a work intention of the target user.
   After acquiring the user identifier, the executing body may determine whether the user identifier satisfies the preset condition. Here, the preset condition may be set by a technician according to an actual application scenario. For example, the preset condition may refer to that the user identifier is in a preset user identifier list, or that a time length since the user identifier being added into the preset user identifier list exceeds a preset time length. If it is determined that the user identifier satisfies the preset condition, the executing body may further acquire the work intention of the target user. Here, the work intention is used to represent a thing that the target user intends to do. The executing body may acquire the work intention of the target user in a plurality of ways. For example, the executing body may determine the work intention by acquiring post of the target user. Alternatively, the executing body may determine the work intention by acquiring the task arrangement of the target user. Alternatively, the executing body may determine the work intention by acquiring speech information of the target user.
Step 203, determining target information based on the user identifier, the work intention and a pre-established knowledge graph.
   After determining the work intention, the executing body may determine the target information based on the user identifier, the work intention, and the pre-established knowledge graph. Here, the pre-established knowledge graph may be a knowledge graph related to precipitated knowledge points of the enterprise, employees in the enterprise, teams, and projects undertaken by the employees and/or teams, and the knowledge graph may include multifaceted information generated by the employees of the enterprise during work. For example, the knowledge graph may include a work summary or minutes of a meeting written by a user. The executing body may query the knowledge graph according to the user identifier, to determine a corresponding employee entity, and then further determine a related employee entity related to the corresponding employee entity, a related team entity related to the corresponding employee entity, a related project entity related to the corresponding employee entity and a related knowledge point entity related to the corresponding employee entity. In the knowledge points related to these related entities, the knowledge including the work intention is used as the target information. For example, the work intention of a user A is "to write minutes of a meeting with a meeting topic XX," the in the knowledge graph a user B related to the user A may be determined, and the user B and the user A belong to the same team. The executing body may use the knowledge "minutes of a meeting" under the knowledge point "meeting topic XX" associated with user B as the target information of the work intention of the user A. Alternatively, the executing body may also acquire a preset corresponding relationship between a work intention and an entity in the knowledge graph. Then, according to the above corresponding relationship, the target information is determined. For example, the work intention of the user is to write a patent, and the above corresponding relationship includes a corresponding relationship between "write a patent" and a certain employee "Little A" who is responsible for patent writing, the executing body may use the employee "Little A" as the target information.
Step 204, pushing the target information to the target user.

The executing body may push the above target information to the target user for reference by the target user, for quickly completing a work task, thereby improving the office efficiency.

Further referring to Fig. 3, illustrating a schematic diagram of an application scenario of the method for pushing information according to an embodiment of the present disclosure. In the application scenario of Fig. 3, a user works using an application A installed in a terminal 301, and records the work task "attend a meeting with a meeting topic XX and write minutes of the meeting" into the application A. A server 302 may analyze the above work task to determine that the work intention of the user is to "write minutes of the meeting." Thus, the information related to the work intention "minutes of the meeting" may be queried from the knowledge graph and then pushed to a target user as target information.

According to the method for pushing information provided in the above embodiment of the present disclosure, the work intention of the user is analyzed, and then by using the knowledge graph, knowledge related to the work intention is pushed to the user, thereby improving the office efficiency of the employee.

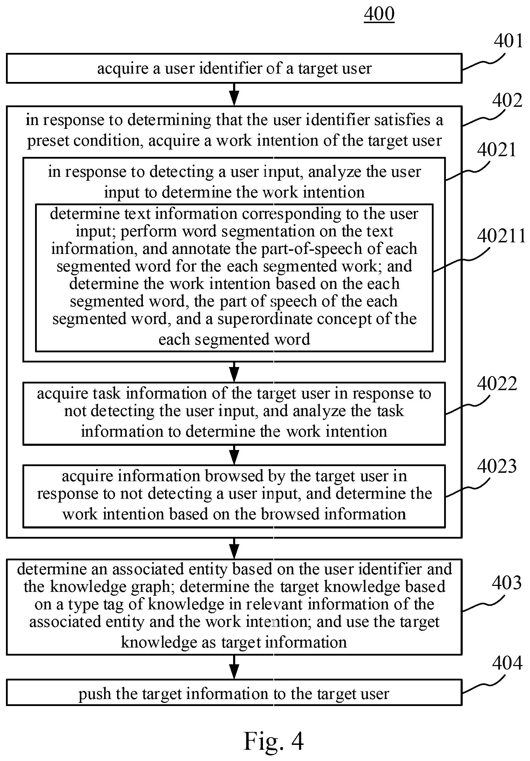

Further referring to Fig. 4, Fig. 4 illustrates a flow 400 of a method for pushing information according to another embodiment of the present disclosure. As shown in Fig. 4, the method for pushing information in this embodiment may include following steps:
Step 401, acquiring a user identifier of a target user.
Step 402, in response to determining that the user identifier satisfies a preset condition, acquiring a work intention of the target user.
   In this embodiment, in the situation where the user identifier satisfies the preset condition, the work intention of the target user may be acquired by at least one of steps 4021-4023.

Step 4021, in response to detecting a user input, analyzing the user input to determine the work intention.

If detects the user input, the executing body may analyze the user input. According to the analysis result, the work intention is determined. Here, the user input may be any information inputted by the user via a used terminal, and the user input may include an input in a form of text, an input in a form of voice, an input in a form of video, and the like. The analysis performed on the user input by the executing body may include semantic analysis, speech recognition, video processing, and the like. The executing body may determine semantic information of the user input based on the above analysis, and perform an intention recognition on the above semantic information to obtain the work intention. For example, if the user inputs a query "How to write minutes of a meeting" via a search engine, it can be learned by analyzing the query that the work intention of the user is to "write minutes of a meeting." The executing body may implement the analysis on the user input through step 40211:

Step 40211, determining text information corresponding to the user input; performing word segmentation on the text information, and annotating the part-of-speech of each segmented word for the each segmented work; and determining the work intention based on the each segmented word, the part of speech of the each segmented word, and a superordinate concept of the each segmented word.

In this embodiment, the executing body may first determine the text information corresponding to the user input. If the user input includes speech, the text information corresponding to the speech may be determined through speech recognition. If the user input refers to an image, the text information corresponding to the image may be determined through optical character recognition. Then, the executing body may perform the word segmentation on the text information to obtain a plurality of words, and annotating the part-of-speech on the each obtained segmented word. The part of speech may include noun, verb, adjective, and the like. Finally, the work intention may be determined based on the each segmented word, the part of speech of the each segmented word, and the superordinate concept of the each segmented word. For example, the user input is "Infoflow Xiaohongdian Demand Development." Through the word segmentation, the words "Infoflow," "Xiaohongdian," "Demand" and "Development" are obtained. The corresponding parts of speech are "modifier," "noun," "noun" and "verb." The corresponding superordinate concepts respectively are "smart office software," "proprietary term," "proprietary term" and "scenario event." Through the above information, the executing body may determine that the work intention of the user is to develop the proprietary term "Xiaohongdian" in the smart office software.

Step 4022, acquiring task information of the target user in response to not detecting the user input, and analyzing the task information to determine the work intention.

If a user input is not detected, the executing body may further acquire the task information of the target user. Here, the task information may be set by the target user through a certain application program or may be inputted by voice. For example, the task information may refer to a meeting from 10:00 to 10:30, or "I will have a meeting from 10:00 to 10:30," or the like. By analyzing the task information of the user, the work intention of the user may be determined. For example, the word segmentation is performed on the task information to obtain time information "from 10:00 to 10:30" corresponding to the segmented words "meeting." Thus, the executing body may determine that the work intention is to "attend the meeting."

Step 4023, acquiring information browsed by the target user in response to not detecting a user input, and determining the work intention based on the browsed information.

In another situation, if a user input is not detected, the executing body may further acquire the information browsed by the target user. The executing body may collect an image of the head of the target user through an image collection apparatus installed in the terminal, and determine the position that the target user browses based on the head pose and the eyeball position. Then, the information displayed on the corresponding position in the page displayed on the terminal may be determined as the information browsed by the target user. Alternatively, the executing body may also detect the position pointed to by the mouse pointer, and then use the corresponding information displayed at the position as the information browsed by the target user. After the information browsed by the target user is determined, processing such as word segmentation and semantic analysis may be performed on the browsed information to determine the corresponding work intention.

Step 403, determining an associated entity based on the user identifier and the knowledge graph; determining the target knowledge based on a type tag of knowledge in relevant information of the associated entity and the work intention; and using the target knowledge as target information.

In this embodiment, after determining the work intention of the user, the executing body may determine the entity corresponding to the user identifier by querying the knowledge graph. Here, the associated entity may be an entity associated with the entity corresponding to the user identifier. For example, the entity corresponding to the user identifier is user A, and the associated entity may be an entity corresponding to user B belonging to the same team as the user A. Then, the executing body may determine the target knowledge based on the type tag of the knowledge in the relevant information of the associated entity and the work intention. In this embodiment, each entity in the knowledge graph includes relevant information, and the relevant information may be metadata of the entity which is used for describing various information of the entity. For example, the relevant information may include the name of the user, the entry time of the user, the project in which the user participates, the team to which the user belongs, the paper published by the user, the patent submitted by the user, the tools mastered by the user, the code wrote by the user, and the like. Here, the paper, the patent, the tools, the code, and the like may be used as the knowledge in the relevant information, and each kind of knowledge has a type tag. For example, the type tag of the paper and the patent may be "Paper/Patent," and the type tag of code may be "Use Case." The executing body may use the knowledge having the same type tag as that of the work intention as the target information.

An example is described in detail below. A user inputs a query sentence "What patents has Employee A published in the field of knowledge graph, in Project B?" through an office software. The executing body may analyzes the query sentence and obtains that the entities include an employee entity (employee A) a project entity (Project B) and a knowledge point entity (knowledge graph), and the work intention is to search for a patent. Then, based on the above employee entity and the knowledge graph, the executing body may find a first-degree relationship, that is, find project members and Project B. Then, an attribute-edge relationship in the knowledge graph is studied based on a second-degree relationship, to find the knowledge point "knowledge graph." Finally, the patent in the relevant information of the knowledge point "knowledge graph" is obtained through matching, and thus, the corresponding patent can be found.

In some alternative implementations of this embodiment, the above knowledge graph may be constructed through the following steps not shown in Fig. 4: acquiring information of an employee of a target enterprise, information of a team to which the employee belongs, information of a project undertaken by the team, and a knowledge point set corresponding to the project; and constructing the knowledge graph based on the information of the employee, the information of the team, the information of the project and the knowledge point set.

In this implementation, through the information of the employee of the target enterprise, the information of the team to which the employee belongs, the information of the project undertaken by the team, and the knowledge point set corresponding to the project, the executing body may use each employee, each team, each project and each knowledge point as entities in the knowledge graph. The knowledge graph is constructed by analyzing relationships between the entities.

In some alternative implementations of this embodiment, the executing body may further acquire a document set related to the knowledge points when constructing the knowledge graph. Here, a document may be an article, a patent, a work summary, a work report or the like published by the user. The executing body may further classify the documents in the document set. During the classification, the executing body may classify the documents according to the title or main body of the documents, and the classification may be implemented in the form of a subject tag. For example, the title of a document is "Summary of Application of Natural Language Processing," and then the subject tag of the document may include "Natural Language Processing" and "Summary of Work." The executing body may further associate the classified document with a knowledge point entity in the knowledge graph. For example, a certain entity in the knowledge graph refers to an employee, and the associated knowledge point entity includes "Natural Language Processing." The executing body may acquire the paper or patent related to "Natural Language Processing" and published by the employee, and associate the above paper or patent with the knowledge point entity "Natural Language Processing."

In some alternative implementations of this embodiment, the executing body may further determine a quality of the each acquired document, to filter a document having a low quality. Particularly, the executing body may perform a low-quality article recognition on the acquired document information. A low-quality article may include an article of which the number of words is less than a preset threshold value, an article of which the title is not related to the body of the article, and the like. Further, the executing body may further grade the quality of the acquired document, that is, perform grade division on the documents according to the quality of the documents. Specifically, the executing body may perform the grade division on the qualities of the documents according to the ratio of the text to the image included in the document, the degree of correlation between the title and the body, the definition of the image, and the like. In addition, the executing body may determine the ranking of the knowledge when pushing the information, according to the qualities of the documents. It may be appreciated that, when a knowledge is recommended to the user, the higher the quality of the document is, the higher the ranking is, thereby enabling the user to acquire knowledge or information having a higher quality.

Step 404, pushing the target information to the target user.

According to the method for pushing information provided in the above embodiment of the present disclosure, in the situation where there is a user input and the situation where there is no user input, it is possible to determine the work intention of the user, and push the appropriate information to the user in combination with the knowledge graph, thereby improving the office efficiency of the user.

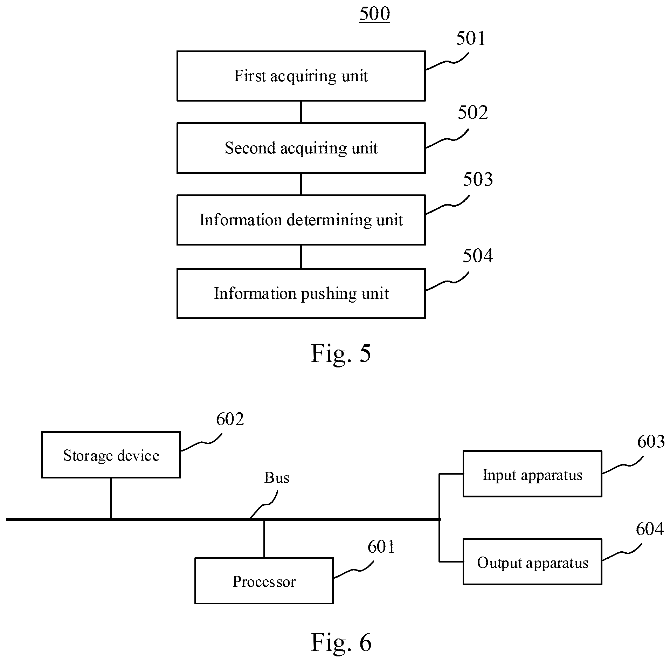

Further referring to Fig. 5, as an implementation of the method shown in the above drawings, an embodiment of the present disclosure provides an apparatus for pushing information. The embodiment of the apparatus corresponds to the embodiment of the method shown in Fig. 2, and the apparatus may be applied to various electronic devices.

As shown in Fig. 5, the apparatus 500 for pushing information in this embodiment includes: a first acquiring unit 501, a second acquiring unit 502, an information determining unit 503 and an information pushing unit 504.

The first acquiring unit 501 is configured to acquire a user identifier of a target user.

The second acquiring unit 502 is configured to, in response to determining that the user identifier satisfies a preset condition, acquire a work intention of the target user.

The information determining unit 503 is configured to determine target information based on the user identifier, the work intention and a pre-established knowledge graph.

The information pushing unit 504 is configured to push the target information to the target user.

In some alternative implementations of this embodiment, the second acquiring unit 502 may be further configured to: in response to detecting a user input, analyze the user input to determine the work intention.

In some alternative implementations of this embodiment, the second acquiring unit 502 may be further configured to: determine text information corresponding to the user input; perform word segmentation on the text information, and annotate a part-of-speech of each segmented word; and determine the work intention based on the each segmented word, the part of speech of the each segmented word, and a superordinate concept of the each segmented word.

In some alternative implementations of this embodiment, the second acquiring unit 502 may be further configured to: in response to not detecting the user input, acquiring information of a task arrangement of the target user; and analyzing the acquired information of the task arrangement to determine the work intention.

In some alternative implementations of this embodiment, the second acquiring unit 502 may be further configured to: in response to not detecting the user input, acquiring information browsed by the target user; and determining the work intention based on the information browsed by the target user.

In some alternative implementations of this embodiment, relevant information of an entity in the knowledge graph comprises a type tag of knowledge. The information determining unit 503 may be further configured to: determining an associated entity based on the user identifier and the knowledge graph; determining the target knowledge based on a type tag of knowledge in relevant information of the associated entity and the work intention; and use the target knowledge as the target information.

In some alternative implementations of this embodiment, the apparatus 500 may further include a graph constructing unit not shown in Fig. 5. The graph constructing unit is configured to: acquiring information of an employee of a target enterprise, information of a team to which the employee belongs, information of a project undertaken by the team, and a knowledge point set corresponding to the project; and constructing the knowledge graph based on the information of the employee, the information of the team, the information of the project and the knowledge point set.

In some alternative implementations of this embodiment, the apparatus 500 may further include a document processing unit not shown in Fig. 5. The document processing unit is configured to: acquiring a document set related to knowledge points included in the knowledge point set; and classifying a document in the document set, and associating the classified document with a knowledge point entity in the knowledge graph.

In some alternative implementations of this embodiment, the document processing unit is further configured to: determine a quality of each document in the document set; and process the each document according to the quality of the each document.

It should be understood that the described units 501-505 in the apparatus 500 for pushing information correspond to the steps in the method described with reference to Fig. 2 respectively. Therefore, the operations and features described above for the method for pushing information are also applicable to the apparatus 500 and the units contained therein, and will not be repeatedly described here.

According to embodiments of the present disclosure, an electronic device and a readable storage medium are provided.

As shown in Fig. 6, Fig. 6 is a block diagram of an electronic device performing the method for pushing information according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 6, one processor 601 is used as an example.

The memory 602 is a non-transitory computer readable storage medium provided by some embodiments of the present disclosure. The memory stores instructions executable by at least one processor, so that the at least one processor performs the method for pushing information provided by some embodiments of the present disclosure. The non-transitory computer readable storage medium of the present disclosure stores computer instructions for causing a computer to perform the method for pushing information provided by some embodiments of the present disclosure.

The memory 602, as a non-transitory computer readable storage medium, may be used to store non-transitory software programs, non-transitory computer executable programs and modules, such as program instructions/modules corresponding to the method for pushing information in embodiments of the present disclosure (for example, the first acquiring unit 501, the second acquiring unit 502, and the information determining unit 503, and the information pushing unit shown in Fig. 5). The processor 601 executes the non-transitory software programs, instructions, and modules stored in the memory 602 to execute various functional applications and data processing of the server, that is, to implement the method for pushing information in the foregoing method embodiment.

The memory 602 may include a storage program area and a storage data area, where the storage program area may store an operating system and at least one function required application program; and the storage data area may store data created by the use of the electronic device according to the method for pushing information, etc. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device of the method for pushing information through a network. Examples of the above network include but are not limited to the Internet, intranet, local area network, mobile communication network, and combinations thereof.

The electronic device of the method for pushing information may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the method for pushing information, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet.

The computer system may include a client and a server. The client and the server are generally far from each other and usually interact through the communication network. The relationship between the client and the server is generated by computer programs that run on the corresponding computer and have a client-server relationship with each other.

According to the technical solution provided in embodiments of the present disclosure, the work intention of the user is analyzed, and relevant knowledge is pushed to the user based on knowledge graph, thus improving the working efficiency of the user.

It should be understood that the various forms of processes shown above may be used to reorder, add, or delete steps. For example, the steps described in the present disclosure may be performed in parallel, sequentially, or in different orders. As long as the desired results of the technical solution disclosed in embodiments of the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. The scope of the invention is defined by the appended claims.

## Claims

1. A computer-implemented method for pushing information, comprising:
acquiring information of an employee of a target enterprise, information of a team to which the employee belongs, information of a project undertaken by the team, and a knowledge point set corresponding to the project;
constructing a knowledge graph by using each employee, each team, each project and each knowledge point as entities in the knowledge graph, and the knowledge graph is constructed by analyzing relationships between the entities;
acquiring (201, 401) a user identifier of a target user;
in response to determining that the user identifier satisfies a preset condition, acquiring (202, 402) a work intention of the target user;
determining (203) target information based on the user identifier, the work intention and the pre-established knowledge graph, wherein the determining (203) comprises:
determining an associated entity based on the user identifier and the knowledge graph, wherein the associated entity is an entity associated with the entity corresponding to the user identifier;
determining target knowledge based on a type tag of knowledge in relevant information of the associated entity and the work intention, wherein each entity in the knowledge graph includes relevant information, and paper, patent, tools, and code are used as knowledges in the relevant information, and each kind of knowledge has a type tag, wherein the knowledge having the same type tag as that of the work intention is determined as the target information; and
pushing (204) the target information to the target user,
wherein the acquiring (202, 402) the work intention of the target user comprises:
in response to not detecting the user input, acquiring (4023) information browsed by the target user, the acquiring (4023) comprising: collecting an image of the head of the target user through an image collection apparatus installed in a terminal, and determining a position that the target user browses based on the head pose and the eyeball position, wherein the information displayed on the corresponding position in the page displayed on the terminal may be determined as the information browsed by the target user; and
determining the work intention based on the information browsed by the target user.

2. The method according to claim 1, wherein the acquiring (202) the work intention of the target user comprises:
in response to detecting a user input, analyzing (4021) the user input to determine the work intention.

3. The method according to claim 2, wherein the analyzing (4021) the user input to determine the work intention comprises:
determining (40211) text information corresponding to the user input;
performing word segmentation on the text information, and annotating a part-of-speech of each segmented word; and
determining the work intention based on the each segmented word, the part of speech of the each segmented word, and a superordinate of the each segmented word.

4. The method according to any one of the preceding claims, wherein the acquiring (202, 402) the work intention of the target user comprises:
in response to not detecting the user input, acquiring (4022) information of a task arrangement of the target user; and
analyzing the acquired information of the task arrangement to determine the work intention.

5. The method according to claim 1, further comprising:
acquiring a document set related to knowledge points included in the knowledge point set; and
classifying a document in the document set, and associating the classified document with a knowledge point entity in the knowledge graph.

6. The method according to claim 5, further comprising:
determining a quality of each document in the document set; and
processing the each document according to the quality of the each document.

7. An apparatus for pushing information, comprising:
a graph constructing unit, configured to acquire information of an employee of a target enterprise, information of a team to which the employee belongs, information of a project undertaken by the team, and a knowledge point set corresponding to the project; and construct a knowledge graph by using each employee, each team, each project and each knowledge point as entities in the knowledge graph, and the knowledge graph is constructed by analyzing relationships between the entities;
a first acquiring unit (501), configured to acquire (201, 401) a user identifier of a target user;
a second acquiring unit (502), configured to, in response to determining that the user identifier satisfies a preset condition, acquire (202, 402) a work intention of the target user;
an information determining unit (503), configured to determine (203) target information based on the user identifier, the work intention and the pre-established knowledge graph; and
an information pushing unit (504), configured to push (204) the target information to the target user,
wherein the information determining unit (503) is further configured to:
determine an associated entity based on the user identifier and the knowledge graph, wherein the associated entity is an entity associated with the entity corresponding to the user identifier;
determine target knowledge based on a type tag of knowledge in relevant information of the associated entity and the work intention, wherein each entity in the knowledge graph includes relevant information, and paper, patent, tools, and code are used as knowledges in the relevant information, and each kind of knowledge has a type tag, wherein the knowledge having the same type tag as that of the work intention is determined as the target information,
wherein the acquire (202, 402) the work intention of the target user comprises:
in response to not detecting the user input, acquiring (4023) information browsed by the target user, the acquiring (4023) comprising: collecting an image of the head of the target user through an image collection apparatus installed in a terminal, and determining a position that the target user browses based on the head pose and the eyeball position, wherein the information displayed on the corresponding position in the page displayed on the terminal may be determined as the information browsed by the target user; and
determining the work intention based on the information browsed by the target user.

8. The apparatus according to claim 7, wherein the second acquiring unit (502) is further configured to:
in response to detecting a user input, analyze (4021) the user input to determine the work intention.

9. The apparatus according to claim 8, wherein the second acquiring unit (502) is further configured to:
determine (40211) text information corresponding to the user input;
performing word segmentation on the text information, and annotating a part-of-speech of each segmented word; and
determining the work intention based on the each segmented word, the part of speech of the each segmented word, and a superordinate of the each segmented word.

10. An electronic device for pushing information, comprising:
at least one processor; and
a storage device, communicated with the at least one processor,
wherein the storage device stores an instruction executable by the at least one processor, and the instruction, when executed by the at least one processor, causes the at least one processor to perform the method according to any one of claims 1-6.

11. A non-transitory computer readable storage medium, storing a computer instruction, wherein the computer instruction, when executed by a processor, causes the processor to perform the method according to any one of claims 1-6.

12. A computer program product comprising a computer program, the computer program, when executed by a processor, causes the processor to implement the method according to any one of claims 1-6.

## Patentansprüche

1. Computerimplementiertes Verfahren zum Übermitteln von Information, umfassend:
Erfassen von Information eines Mitarbeiters eines Zielunternehmens, Information eines Teams, zu dem der Mitarbeiter gehört, Information eines Projekts, das vom Team durchgeführt wird, und eines Wissenspunktsatzes, der dem Projekt entspricht;
Konstruieren eines Wissensgraphen durch Verwenden jedes Mitarbeiters, jedes Teams, jedes Projekts und jedes Wissenspunkts als Entitäten in dem Wissensgraphen, und der Wissensgraph wird durch Analysieren von Beziehungen zwischen den Entitäten konstruiert;
Erfassen (201, 401) einer Benutzerkennung eines Zielbenutzers;
als Reaktion auf Bestimmen, dass die Benutzerkennung eine voreingestellte Bedingung erfüllt, Erfassen (202, 402) einer Arbeitsabsicht des Zielbenutzers;
Bestimmen (203) von Zielinformation basierend auf der Benutzerkennung, der Arbeitsabsicht und dem vorab erstellten Wissensgraphen, wobei das Bestimmen (203) umfasst:
Bestimmen einer zugeordneten Entität basierend auf der Benutzerkennung und dem Wissensgraphen, wobei die zugeordnete Entität eine Entität ist, die der Entität zugeordnet ist, die der Benutzerkennung entspricht;
Bestimmen von Zielwissen basierend auf einem Typkennzeichen von Wissen in relevanter Information der zugeordneten Entität und der Arbeitsabsicht, wobei jede Entität in dem Wissensgraphen relevante Information umfasst, und Schrift, Patent, Werkzeuge und Code als Wissen in der relevanten Information verwendet werden, und jede Art von Wissen ein Typkennzeichen aufweist, wobei das Wissen, das dasselbe Typkennzeichen wie das der Arbeitsabsicht aufweist, als die Zielinformation bestimmt wird; und
Übermitteln (204) der Zielinformation an den Zielbenutzer,
wobei das Erfassen (202, 402) der Arbeitsabsicht des Zielbenutzers umfasst:
als Reaktion auf Nichterfassen der Benutzereingabe, Erfassen (4023) von Information, die vom Zielbenutzer durchsucht wird, wobei das Erfassen (4023) umfasst: Erfassen eines Bildes des Kopfes des Zielbenutzers durch eine Bilderfassungsvorrichtung, die in einem Endgerät installiert ist, und Bestimmen einer Position, die der Zielbenutzer durchsucht, basierend auf der Kopfhaltung und der Augapfelposition, wobei die Information, die an der entsprechenden Position in der Seite angezeigt wird, die auf dem Endgerät angezeigt wird, als die Information bestimmt werden kann, die vom Zielbenutzer durchsucht wird; und
Bestimmen der Arbeitsabsicht basierend auf der Information, die vom Zielbenutzer durchsucht wird.

2. Verfahren nach Anspruch 1, wobei das Erfassen (202) der Arbeitsabsicht des Zielbenutzers umfasst:
als Reaktion auf Erfassen einer Benutzereingabe, Analysieren (4021) der Benutzereingabe, um die Arbeitsabsicht zu bestimmen.

3. Verfahren nach Anspruch 2, wobei das Analysieren (4021) der Benutzereingabe, um die Arbeitsabsicht zu bestimmen, umfasst:
Bestimmen (40211) von Textinformation, die der Benutzereingabe entspricht;
Ausführen von Wortsegmentierung an der Textinformation und Annotieren einer Wortart jedes segmentierten Wortes; und
Bestimmen der Arbeitsabsicht basierend auf dem jeweiligen segmentierten Wort, der Wortart des jeweiligen segmentierten Wortes und einem Übergeordneten des jeweiligen segmentierten Wortes.

4. Verfahren nach einem der vorhergehenden Ansprüche, wobei das Erfassen (202, 402) der Arbeitsabsicht des Zielbenutzers umfasst:
als Reaktion auf Nichterfassen der Benutzereingabe, Erfassen (4022) von Information einer Aufgabenanordnung des Zielbenutzers; und
Analysieren der erfassten Information der Aufgabenanordnung, um die Arbeitsabsicht zu bestimmen.

5. Verfahren nach Anspruch 1, ferner umfassend:
Erfassen eines Dokumentensatzes, der sich auf Wissenspunkte bezieht, die in dem Wissenspunktsatz enthalten sind; und
Klassifizieren eines Dokuments in dem Dokumentensatz und Zuordnen des klassifizierten Dokuments zu einer Wissenspunktentität in dem Wissensgraphen.

6. Verfahren nach Anspruch 5, ferner umfassend:
Bestimmen einer Qualität jedes Dokuments in dem Dokumentensatz; und
Verarbeiten des jeweiligen Dokuments gemäß der Qualität des jeweiligen Dokuments.

7. Vorrichtung zum Übermitteln von Information, umfassend:
eine Graphenkonstruktionseinheit, konfiguriert zum Erfassen von Information eines Mitarbeiters eines Zielunternehmens, Information eines Teams, zu dem der Mitarbeiter gehört, Information eines Projekts, das vom Team durchgeführt wird, und eines Wissenspunktsatzes, der dem Projekt entspricht; und Konstruieren eines Wissensgraphen durch Verwenden jedes Mitarbeiters, jedes Teams, jedes Projekts und jedes Wissenspunkts als Entitäten in dem Wissensgraphen, und der Wissensgraph wird durch Analysieren von Beziehungen zwischen den Entitäten konstruiert;
eine erste Erfassungseinheit (501), konfiguriert zum Erfassen (201, 401) einer Benutzerkennung eines Zielbenutzers;
eine zweite Erfassungseinheit (502), konfiguriert zum, als Reaktion auf Bestimmen, dass die Benutzerkennung eine voreingestellte Bedingung erfüllt, Erfassen (202, 402) einer Arbeitsabsicht des Zielbenutzers;
eine Informationsbestimmungseinheit (503), konfiguriert zum Bestimmen (203) von Zielinformation basierend auf der Benutzerkennung, der Arbeitsabsicht und dem vorab erstellten Wissensgraphen; und
eine Informationsübermittlungseinheit (504), konfiguriert zum Übermitteln (204) der Zielinformation an den Zielbenutzer,
wobei die Informationsbestimmungseinheit (503) ferner konfiguriert ist zum:
Bestimmen einer zugeordneten Entität basierend auf der Benutzerkennung und dem Wissensgraphen, wobei die zugeordnete Entität eine Entität ist, die der Entität zugeordnet ist, die der Benutzerkennung entspricht;
Bestimmen von Zielwissen basierend auf einem Typkennzeichen von Wissen in relevanter Information der zugeordneten Entität und der Arbeitsabsicht, wobei jede Entität in dem Wissensgraphen relevante Information umfasst, und Schrift, Patent, Werkzeuge und Code als Wissen in der relevanten Information verwendet werden, und jede Art von Wissen ein Typkennzeichen aufweist, wobei das Wissen, das dasselbe Typkennzeichen wie das der Arbeitsabsicht aufweist, als die Zielinformation bestimmt wird,
wobei das Erfassen (202, 402) der Arbeitsabsicht des Zielbenutzers umfasst:
als Reaktion auf Nichterfassen der Benutzereingabe, Erfassen (4023) von Information, die vom Zielbenutzer durchsucht wird, wobei das Erfassen (4023) umfasst: Erfassen eines Bildes des Kopfes des Zielbenutzers durch eine Bilderfassungsvorrichtung, die in einem Endgerät installiert ist, und Bestimmen einer Position, die der Zielbenutzer durchsucht, basierend auf der Kopfhaltung und der Augapfelposition, wobei die Information, die an der entsprechenden Position in der Seite angezeigt wird, die auf dem Endgerät angezeigt wird, als die Information bestimmt werden kann, die vom Zielbenutzer durchsucht wird; und
Bestimmen der Arbeitsabsicht basierend auf der Information, die vom Zielbenutzer durchsucht wird.

8. Vorrichtung nach Anspruch 7, wobei die zweite Erfassungseinheit (502) ferner konfiguriert ist zum:
als Reaktion auf Erfassen einer Benutzereingabe, Analysieren (4021) der Benutzereingabe, um die Arbeitsabsicht zu bestimmen.

9. Vorrichtung nach Anspruch 8, wobei die zweite Erfassungseinheit (502) ferner konfiguriert ist zum:
Bestimmen (40211) von Textinformation, die der Benutzereingabe entspricht;
Ausführen von Wortsegmentierung an der Textinformation und Annotieren einer Wortart jedes segmentierten Wortes; und
Bestimmen der Arbeitsabsicht basierend auf dem jeweiligen segmentierten Wort, der Wortart des jeweiligen segmentierten Wortes und einem Übergeordneten des jeweiligen segmentierten Wortes.

10. Elektronische Vorrichtung zum Übermitteln von Information, umfassend:
mindestens einen Prozessor; und
eine Speichervorrichtung, die mit dem mindestens einen Prozessor kommuniziert,
wobei die Speichervorrichtung eine Anweisung speichert, die durch den mindestens einen Prozessor ausführbar ist, und die Anweisung, wenn sie durch den mindestens einen Prozessor ausgeführt wird, den mindestens einen Prozessor veranlasst, das Verfahren nach einem der Ansprüche 1 bis 6 auszuführen.

11. Nichtflüchtiges computerlesbares Speichermedium, das eine Computeranweisung speichert, wobei die Computeranweisung, wenn sie durch einen Prozessor ausgeführt wird, den Prozessor veranlasst, das Verfahren nach einem der Ansprüche 1 bis 6 auszuführen.

12. Computerprogrammprodukt, umfassend ein Computerprogramm, wobei das Computerprogramm, wenn es durch einen Prozessor ausgeführt wird, den Prozessor veranlasst, das Verfahren nach einem der Ansprüche 1 bis 6 zu implementieren.

## Revendications

1. Procédé mis en œuvre par ordinateur pour pousser des informations, comprenant :
acquérir des informations d'un employé d'une entreprise cible, des informations d'une équipe à laquelle l'employé appartient, des informations d'un projet qui est entrepris par l'équipe, et un ensemble de points de connaissance qui correspond au projet ;
construire un graphe de connaissances en utilisant chaque employé, chaque équipe, chaque projet et chaque point de connaissance comme entités dans le graphe de connaissances, et le graphe de connaissances est construit en analysant des relations entre les entités ;
acquérir (201, 401) un identifiant d'utilisateur d'un utilisateur cible ;
en réponse à la détermination que l'identifiant d'utilisateur satisfait une condition prédéfinie, acquérir (202, 402) une intention de travail de l'utilisateur cible ;
déterminer (203) une information cible sur la base de l'identifiant d'utilisateur, de l'intention de travail et du graphe de connaissances qui est préétabli, dans lequel la détermination (203) comprend :
déterminer une entité associée sur la base de l'identifiant d'utilisateur et du graphe de connaissances, dans lequel l'entité associée est une entité qui est associée à l'entité qui correspond à l'identifiant d'utilisateur ;
déterminer une connaissance cible sur la base d'une étiquette de type de connaissance dans une information pertinente de l'entité associée et de l'intention de travail, dans lequel chaque entité dans le graphe de connaissances inclut une information pertinente, et un article, un brevet, des outils, et un code sont utilisés comme connaissances dans l'information pertinente, et chaque type de connaissance a une étiquette de type, dans lequel la connaissance ayant la même étiquette de type que celle de l'intention de travail est déterminée comme l'information cible ; et
pousser (204) l'information cible vers l'utilisateur cible,
dans lequel l'acquisition (202, 402) de l'intention de travail de l'utilisateur cible comprend :
en réponse à la non-détection de l'entrée d'utilisateur, acquérir (4023) une information qui est consultée par l'utilisateur cible, l'acquisition (4023) comprenant : collecter une image de la tête de l'utilisateur cible par l'intermédiaire d'un appareil de collecte d'images qui est installé dans un terminal, et déterminer une position que l'utilisateur cible consulte sur la base de la pose de la tête et de la position du globe oculaire, dans lequel l'information qui est affichée sur la position correspondante dans la page qui est affichée sur le terminal peut être déterminée comme l'information qui est consultée par l'utilisateur cible ; et
déterminer l'intention de travail sur la base de l'information qui est consultée par l'utilisateur cible.

2. Procédé selon la revendication 1, dans lequel l'acquisition (202) de l'intention de travail de l'utilisateur cible comprend :
en réponse à la détection d'une entrée d'utilisateur, analyser (4021) l'entrée d'utilisateur pour déterminer l'intention de travail.

3. Procédé selon la revendication 2, dans lequel l'analyse (4021) de l'entrée d'utilisateur pour déterminer l'intention de travail comprend :
déterminer (40211) une information textuelle qui correspond à l'entrée d'utilisateur ;
effectuer une segmentation de mots sur l'information textuelle, et annoter une partie du discours de chaque mot segmenté ; et
déterminer l'intention de travail sur la base de chaque mot segmenté, de la partie du discours de chaque mot segmenté, et d'un hyperonyme de chaque mot segmenté.

4. Procédé selon l'une quelconque des revendications précédentes, dans lequel l'acquisition (202, 402) de l'intention de travail de l'utilisateur cible comprend :
en réponse à la non-détection de l'entrée d'utilisateur, acquérir (4022) une information d'une organisation de tâches de l'utilisateur cible ; et
analyser l'information acquise de l'organisation de tâches pour déterminer l'intention de travail.

5. Procédé selon la revendication 1, comprenant en outre :
acquérir un ensemble de documents qui est lié à des points de connaissance qui sont inclus dans l'ensemble de points de connaissance ; et
classifier un document dans l'ensemble de documents, et associer le document qui est classifié à une entité de point de connaissance dans le graphe de connaissances.

6. Procédé selon la revendication 5, comprenant en outre :
déterminer une qualité de chaque document dans l'ensemble de documents ; et
traiter chaque document selon la qualité de chaque document.

7. Appareil pour pousser des informations, comprenant :
une unité de construction de graphe, qui est configurée pour acquérir des informations d'un employé d'une entreprise cible, des informations d'une équipe à laquelle l'employé appartient, des informations d'un projet qui est entrepris par l'équipe, et un ensemble de points de connaissance qui correspond au projet ; et construire un graphe de connaissances en utilisant chaque employé, chaque équipe, chaque projet et chaque point de connaissance comme entités dans le graphe de connaissances, et le graphe de connaissances est construit en analysant des relations entre les entités ;
une première unité d'acquisition (501), qui est configurée pour acquérir (201, 401) un identifiant d'utilisateur d'un utilisateur cible ;
une deuxième unité d'acquisition (502), qui est configurée pour, en réponse à la détermination que l'identifiant d'utilisateur satisfait une condition prédéfinie, acquérir (202, 402) une intention de travail de l'utilisateur cible ;
une unité de détermination d'information (503), qui est configurée pour déterminer (203) une information cible sur la base de l'identifiant d'utilisateur, de l'intention de travail et du graphe de connaissances qui est préétabli ; et
une unité de poussée d'information (504), qui est configurée pour pousser (204) l'information cible vers l'utilisateur cible,
dans lequel l'unité de détermination d'information (503) est en outre configurée pour :
déterminer une entité associée sur la base de l'identifiant d'utilisateur et du graphe de connaissances, dans lequel l'entité associée est une entité qui est associée à l'entité qui correspond à l'identifiant d'utilisateur ;
déterminer une connaissance cible sur la base d'une étiquette de type de connaissance dans une information pertinente de l'entité associée et de l'intention de travail, dans lequel chaque entité dans le graphe de connaissances inclut une information pertinente, et un article, un brevet, des outils, et un code sont utilisés comme connaissances dans l'information pertinente, et chaque type de connaissance a une étiquette de type, dans lequel la connaissance ayant la même étiquette de type que celle de l'intention de travail est déterminée comme l'information cible,
dans lequel l'acquisition (202, 402) de l'intention de travail de l'utilisateur cible comprend :
en réponse à la non-détection de l'entrée d'utilisateur, acquérir (4023) une information qui est consultée par l'utilisateur cible, l'acquisition (4023) comprenant : collecter une image de la tête de l'utilisateur cible par l'intermédiaire d'un appareil de collecte d'images qui est installé dans un terminal, et déterminer une position que l'utilisateur cible consulte sur la base de la pose de la tête et de la position du globe oculaire, dans lequel l'information qui est affichée sur la position correspondante dans la page qui est affichée sur le terminal peut être déterminée comme l'information qui est consultée par l'utilisateur cible ; et
déterminer l'intention de travail sur la base de l'information qui est consultée par l'utilisateur cible.

8. Appareil selon la revendication 7, dans lequel la deuxième unité d'acquisition (502) est en outre configurée pour :
en réponse à la détection d'une entrée d'utilisateur, analyser (4021) l'entrée d'utilisateur pour déterminer l'intention de travail.

9. Appareil selon la revendication 8, dans lequel la deuxième unité d'acquisition (502) est en outre configurée pour :
déterminer (40211) une information textuelle qui correspond à l'entrée d'utilisateur ;
effectuer une segmentation de mots sur l'information textuelle, et annoter une partie du discours de chaque mot segmenté ; et
déterminer l'intention de travail sur la base de chaque mot segmenté, de la partie du discours de chaque mot segmenté, et d'un hyperonyme de chaque mot segmenté.

10. Dispositif électronique pour pousser des informations, comprenant :
au moins un processeur ; et
un dispositif de stockage, qui est en communication avec l'au moins un processeur,
dans lequel le dispositif de stockage stocke une instruction qui est exécutable par l'au moins un processeur, et l'instruction, lorsqu'elle est exécutée par l'au moins un processeur, amène l'au moins un processeur à exécuter le procédé selon l'une quelconque des revendications 1 à 6.

11. Support de stockage lisible par ordinateur non transitoire, stockant une instruction informatique, dans lequel l'instruction informatique, lorsqu'elle est exécutée par un processeur, amène le processeur à exécuter le procédé selon l'une quelconque des revendications 1 à 6.

12. Produit-programme d'ordinateur comprenant un programme d'ordinateur, le programme d'ordinateur, lorsqu'il est exécuté par un processeur, amène le processeur à mettre en œuvre le procédé selon l'une quelconque des revendications 1 à 6.
